# EUROPEAN PATENT APPLICATION

(11) **EP 4 535 145 A1**
(43) Date of publication of application: **09.04.2025**
(21) Application number: 24185640.0
(22) Date of filing: 01.07.2024
(51) Int. Cl.: G06F 3/0481, G06F 3/04815, G06F 3/0484, G06F 3/0486

(54) **INFORMATION PROCESSING SYSTEM, PROGRAM, AND INFORMATION PROCESSING METHOD**

(30) Priority: 06.10.2023 JP 2023174515; 26.03.2024 JP 2024049208
(71) Applicant: FUJIFILM Business Innovation Corp., Minato-ku Tokyo (JP)
(72) Inventor: KUMAGAI, Himika, Yokohama-shi, Kanagawa (JP); KIKUSHIMA, Kosuke, Yokohama-shi, Kanagawa (JP); MATSUOKA, Daiki, Yokohama-shi, Kanagawa (JP)
(74) Representative: Kurig, Thomas

(57) **Abstract**

An information processing system includes a processor configured to: display a first content in a first window displayed on a display; in response to a user operation during a period in which the first content is displayed in the first window, display a second window corresponding to the user operation; in a case where the first content displayed in the first window is switched to another content, hide the second window and display the other content in the first window; and in a case where the display of the first window is returned to the first content, display the second window, which is displayed in response to the user operation in the first window in which the first content is displayed, in a state before the second window is hidden.

## Description

### BACKGROUND OF THE INVENTION

### (i) Field of the Invention

The present invention relates to an information processing system, a program, and an information processing method.

### (ii) Description of Related Art

For example, documents received by various units such as scanning via a multifunction peripheral, reception via an FAX, mail, a hot folder, Web upload, API call from an external service, and chat may be collected in a workspace on a computer provided by a document management application, and a user may transmit the documents to a subsequent system after performing necessary operations on the documents on the workspace.

The workspace is provided to the user as a workspace on the computer in this way. In recent years, a cloud-type workspace that can be used from an office, a client's place, a home, or the like has been provided.

Such a cloud-type workspace can be activated on an information apparatus such as a PC used by the user by accessing a server that provides the workspace using a general-purpose web browser. In addition, the user can perform work while accessing and viewing a plurality of websites simultaneously by opening a plurality of windows from the web browser or accessing the website from a tab different from a tab for accessing the workspace in the identical web browser in addition to the workspace.

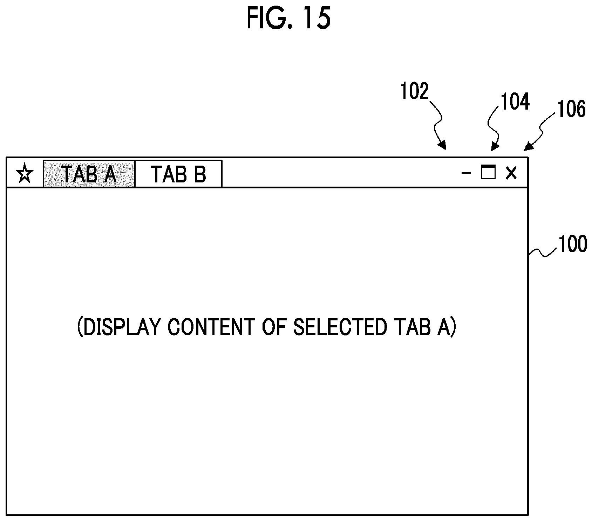

Here, the "window" refers to a visual area given to each application software or the like on a device such as a display in a window system of a computer having a graphical user interface (GUI). Fig. 15 shows a screen display example of a general window. A window 100 is typically a rectangular visual area displayed by starting an application up, a minimize button 102, a maximize button 104, and a close button 106 that can be selected by the user are usually displayed in an upper right of the visual area, and processing of minimizing and maximizing the visual area and terminating the application (that is, processing of closing the window 100) is performed in response to the selection of the corresponding buttons 102, 104, and 106. However, this is merely a typical example of the window 100, and the window is not limited to a window in which the buttons 102, 104, and 106 are necessarily displayed. A visual area need only be used, which is secured for displaying some display content and is a target of control of display or hiding in response to the activation or the termination of the application or the like.

### SUMMARY OF THE INVENTION

For example, in a case where the display content displayed in the window is the workspace, the user may perform the work while displaying another content in another window and referring to the displayed content, in addition to the window that displays the workspace, or the user may perform the work while exchanging information between the workspace and the software (that is, between a first window and a second window), for example, in a case where the other window is displayed as a result of some software being activated. That is, in addition to the first window that displays some display content (for example, the workspace), the second window for additional display content (for example, the software activated from the workspace) may be displayed.

An object of the present invention is to enable a user to reproduce a work environment in original display, in a state before switching, in a case where the user performs work using a state where a first window and a second window are displayed as the work environment, and the user switches display of the first window to another content and returns the display of the first window to the original display.

According to an aspect of the present disclosure, there is provided an information processing system including: a processor configured to: display a first content in a first window displayed on a display; in response to a user operation during a period in which the first content is displayed in the first window, display a second window corresponding to the user operation; in a case where the first content displayed in the first window is switched to another content, hide the second window and display the other content in the first window; and in a case where the display of the first window is returned to the first content, display the second window, which is displayed in response to the user operation in the first window in which the first content is displayed, in a state before the second window is hidden.

The processor may be configured to: display the second window in which a specific operation is performed by a user before the second window is hidden, in a different manner from another second window.

The processor may be configured to: in a case where a plurality of second windows are displayed, display the second window in which the specific operation is performed, on a foreground among the other second windows.

The processor may be configured to: store an initial state in a case where the second window is displayed; and in a case where the second window in which the specific operation is performed is closed, update the initial state of the second window in which the specific operation is performed, to a state in a case where the second window is closed.

The processor may be configured to: in a case where the second window is closed without the specific operation being performed after a state of the second window is changed after the second window is displayed, not update the initial state of the closed second window.

The first content may be a workspace in which a file is displayed, and the processor may be configured to: enable the file to be exchanged between the workspace and the second window displayed in response to the user operation in the first window displayed in the workspace.

The processor may be configured to: store the file on the second window, which is acquired by the user operation in the second window, in the workspace associated with the second window.

The processor may be configured to: in a case where the second window is displayed in a state where a user selects a file in the first content, display the second window in a state where a setting based on information on the first content or information on the file acquired from the file is performed.

The processor may be configured to: in a case where the second window is a window for activating a mail tool, display the second window in a state where information on at least one of a destination, a subject, or a body text based on the information on the first content or the file is set in a mail created by the mail tool.

According to another aspect of the present disclosure, there is provided a program causing a computer to realize: a function of displaying a first content in a first window displayed on a display; a function of, in response to a user operation during a period in which the first content is displayed in the first window, displaying a second window corresponding to the user operation; a function of, in a case where the first content displayed in the first window is switched to another content, hiding the second window and displaying the other content in the first window; and a function of, in a case where the display of the first window is returned to the first content, displaying the second window, which is displayed in response to the user operation in the first window in which the first content is displayed, in a state before the second window is hidden.

According to still another aspect of the present disclosure, there is provided an information processing method including: displaying a first content in a first window displayed on a display; displaying, in response to a user operation during a period in which the first content is displayed in the first window, a second window corresponding to the user operation; hiding, in a case where the first content displayed in the first window is switched to another content, the second window and displaying the other content in the first window; and displaying, in a case where the display of the first window is returned to the first content, the second window, which is displayed in response to the user operation in the first window in which the first content is displayed, in a state before the second window is hidden.

According to the first aspect of the present invention, the user can be enabled to reproduce a work environment in original display, in a state before switching, in a case where the user performs work using a state where a first window and a second window are displayed as the work environment, and the user switches display of the first window to another content and returns the display of the first window to the original display.

According to the second aspect of the present invention, the second window in which the specific operation is performed by the user among the second windows can be handled to be displayed in a different manner from the other second window.

According to the third aspect of the present invention, a display content of the second window in which the specific operation is performed can be visually recognized at all times.

According to the fourth aspect of the present invention, in a case where software that is activated in the second window in which the specific operation is performed is activated again, the second window in a state identical to the state at a termination point in time can be assigned to the software.

According to the fifth aspect of the present invention, in a case where the second window is closed without the specific operation being performed, the initial state can be prevented from being updated.

According to the sixth aspect of the present invention, it is possible to allow the mutual exchange of the file between the workspace and the software.

According to the seventh aspect of the present invention, the files acquired by the software can be collectively managed in the workspace.

According to the eighth aspect of the present invention, the software can be activated in a state where the setting is performed on the software in advance.

According to the ninth aspect of the present invention, all or a part of the information to be set in the mail can be automatically acquired and set from the document designated by the user.

According to the tenth and eleventh aspects of the present invention, the user can be enabled to reproduce the work environment in the original display, in a state before switching, in a case where the user performs the work using a state where the first window and the second window are displayed as the work environment, and the user switches the display of the first window to another content and returns the display of the first window to the original display.

### BRIEF DESCRIPTION OF THE DRAWINGS

Exemplary embodiment(s) of the present invention will be described in detail based on the following figures, wherein:
Fig. 1 is a block diagram showing an overall configuration of a document management system and a PC according to the present exemplary embodiment;
Fig. 2 is a diagram showing an example of a screen displayed on the PC according to the present exemplary embodiment;
Fig. 3 is a diagram showing a data configuration example of a tool management table according to the present exemplary embodiment;
Fig. 4 is a diagram showing an operation in a case where a mail transmission-dedicated creation tool set in a toolbar is selected in the present exemplary embodiment;
Fig. 5 is a diagram showing a display example of a browser screen that transitions in response to a user operation, which shows a characteristic operation in the present exemplary embodiment;
Fig. 6 is a diagram showing a display example of a browser screen that transitions in response to the user operation in a case where an additional function according to the present exemplary embodiment is used;
Fig. 7 is a diagram showing a display example of a browser screen that transitions in response to the user operation in a case where the additional function according to the present exemplary embodiment is not used;
Fig. 8 is a diagram showing a display example of a browser screen that transitions in response to the user operation, which shows another characteristic operation in the present exemplary embodiment;
Fig. 9A is a flowchart showing processing in a case where a workspace is used in the present exemplary embodiment;
Fig. 9B is a flowchart continuing from Fig. 9A;
Fig. 10 is a flowchart showing tool activation processing according to the present exemplary embodiment;
Fig. 11 is a flowchart showing download processing according to the present exemplary embodiment;
Fig. 12 is a flowchart showing business processing to which the workspace according to the present exemplary embodiment is applied;
Fig. 13 is a diagram showing a part of the business processing to which the workspace according to the present exemplary embodiment is applied, by using a screen display example;
Fig. 14 is a diagram showing another part of the business processing to which the workspace according to the present exemplary embodiment is applied, by using the screen display example; and
Fig. 15 is a diagram showing a screen display example of a general window.

### DETAILED DESCRIPTION OF THE INVENTION

Hereinafter, an exemplary embodiment of the present invention will be described in detail with reference to the drawings.

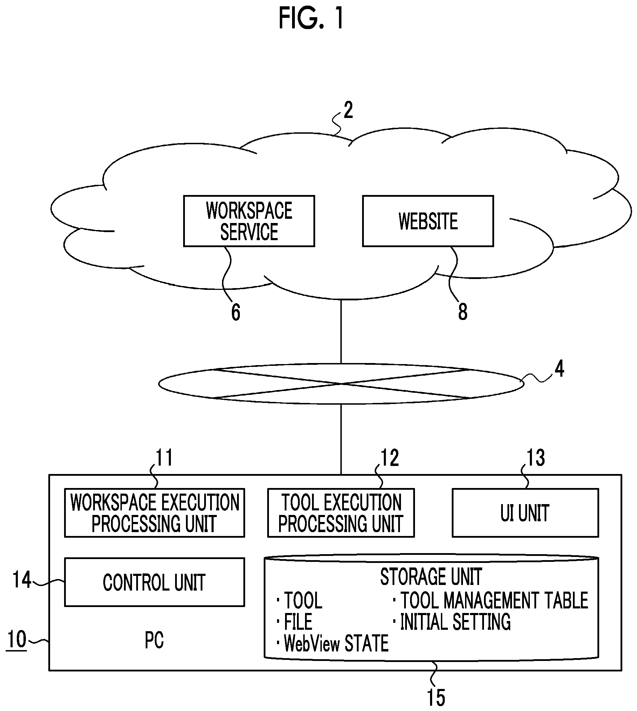

Fig. 1 is a block diagram showing an overall configuration of a document management system and a PC according to the present exemplary embodiment. Fig. 1 shows a configuration in which a cloud 2 and a personal computer (PC) 10 used by a user of a workspace are connected by a network 4 including the Internet.

The cloud 2 is realized by one or a plurality of computers and provides various services to the user. The cloud 2 according to the present exemplary embodiment includes a cloud-type workspace service 6 and a website 8. The workspace service 6 is accessed from the PC 10 brought into an office, a client's place, a home, or the like, to provide the cloud-type workspace on the PC 10. It should be noted that the workspace is a workspace displayed on a computer such as the PC 10 and is a memory area provided as the workspace by the workspace service 6 that can be realized by a document management application. In the following description, the term "workspace" may be described as having a meaning of an application, in addition to simply meaning the workspace. The website 8 refers to a collection of web applications (software that is activated on the web) or web pages on the Internet. The workspace provided by the workspace service 6 and the website 8 are displayed by a browser installed in the PC 10.

The PC 10 is an information processing apparatus corresponding to an information processing system according to the exemplary embodiment of the present invention. The PC 10 according to the present exemplary embodiment can be realized by a general-purpose hardware configuration that has been available in the related art. That is, the PC 10 includes a user interface including a CPU, a ROM, a RAM, a hard disk drive (HDD), and the like as storage units, a network interface as a communication unit, an input unit such as a mouse or a keyboard, and a display unit such as a display.

As shown in Fig. 1, the PC 10 includes a workspace execution processing unit 11, a tool execution processing unit 12, a user interface (UI) unit 13, a control unit 14, and a storage unit 15. It should be noted that components not used in the description of the present exemplary embodiment will be omitted from the drawings, and the description thereof will be omitted.

The workspace execution processing unit 11 executes processing related to the workspace, such as acquiring, via hypertext transfer protocol (HTTP) communication, the workspace provided by the workspace service 6 or the content such as various data included in the workspace from the cloud 2, and displaying the acquired workspace or content. The workspace execution processing unit 11 can be realized by a general-purpose browser, and displays the workspace as a first content in a window ("first window" according to the present invention) of the browser by accessing the workspace service 6 through the browser that is activated on the PC.

The tool execution processing unit 12 executes processing related to the tool that is activated in response to a user operation in the workspace displayed in the window of the browser by the workspace execution processing unit 11. Here, various functions are assigned to the tool, and as the various functions, functions such as activating any software, accessing any website, and displaying any display content are considered. As a result of the activation of these functions, as the display content corresponding to each function, a window different from the window in which the workspace is displayed is displayed, and the display content corresponding to each function is displayed in the window. In the present exemplary embodiment, an example is shown in which the software is activated as a result of executing the processing related to the tool in response to the user operation in the workspace. The tool is basically a web application or a website that is activated by using a browser function and is also referred to as a "Web View" in the present exemplary embodiment. In the "Web View", the same function to the browser is incorporated on the workspace and the web application or the website is activated and displayed from the workspace. Since the tool according to the present exemplary embodiment is assumed to be activated by a function of the Web View, the terms "tool" and "Web View" are used interchangeably. Such processing need only be realized, for example, by associating an URL for accessing any web application, a website, or the like with an icon that is an example of an operator for activating the tool, and performing control of accessing the web application, the website, or the like in response to the selection of the operator.

The web application or the website as a display target in the present exemplary embodiment is assumed to be the website 8 present on the cloud 2 or the Internet. As described above, in a case where the workspace execution processing unit 11 activates the corresponding software (that is, Web View) in response to the user operation in the workspace, specifically, a selection operation on a toolbar described later, through the browser function (that is, the browser function of displaying the Web View) in the tool execution processing unit 12, separately from the window of the browser that displays the workspace, a window ("second window" according to the exemplary embodiment of the present invention) of a browser is displayed by being assigned to the tool (that is, the Web View). As described above, the tool operates in a window different from the window that displays the workspace.

The user interface unit 13 is realized by an input unit such as a mouse and a display unit such as a display, receives the user operation, and performs display on the display. The workspace execution processing unit 11 and the tool execution processing unit 12 perform display control on the user interface unit 13. The control unit 14 controls the operations of the respective components 11 to 13.

The storage unit 15 stores various types of information used in the present exemplary embodiment. Specifically, as shown in Fig. 1, a tool, a tool management table, a file, an initial setting, and a Web View state are stored. The tool is software activated from the workspace as described above. The file is a file such as a document that is an operation target in the workspace. The initial setting is an initial setting value of a window assigned to the software in a case where the software is activated from the workspace. For example, the initial setting value is a size or a display position of the window. The Web View state is represented by a parameter indicating a state of the window to which the Web View is assigned after the Web View is activated, and specifically, a size or a display position of the window. That is, for example, the size or the display position of the window in the Web View state are the initial setting values in a case where the position or the size of the window is not changed after the Web View is activated, and are changed values in a case where the position or the size of the window is changed. It should be noted that the tool management table will be described later. In addition, in the present exemplary embodiment, although it is shown that various types of information are collectively stored in one storage unit 15 for convenience, the various types of information may be stored separately.

The respective components 11 to 14 in the PC 10 are realized by a cooperative operation of the computer forming the PC 10 and a program operated by the CPU mounted in the computer. In addition, the storage unit 15 is realized by the HDD mounted in the PC 10. Alternatively, the RAM or an external storage unit may be used via a network.

Further, the program used in the present exemplary embodiment can be provided not only by a communication unit but also by being stored in a computer-readable recording medium such as a CD-ROM or a USB memory. The program provided from the communication unit or the recording medium are installed in the computer, and the CPU of the computer sequentially executes the program to realize various types of processing.

The "information processing system" in the present exemplary embodiment is described as being configured by an information processing apparatus of a single PC 10 as an example, but may be configured by a plurality of information processing apparatuses. In addition, in a case where such processing is realized on the PC 10 via the server, the server that performs such control can be regarded as the "information processing system" according to the present exemplary embodiment. In this case as well, it does not matter whether the server is configured by a single information processing apparatus or is configured by a plurality of information processing apparatuses.

The information processing system according to the present exemplary embodiment detects that the documents (for example, a file attached to a mail, a FAX document, and a file uploaded on a chat) are received via various services such as a mail, a FAX, and a chat in cooperation with the information processing system, and collects the documents. Thereafter, preprocessing set in advance by the user is executed for each document, and then an attribute and/or an attribute value corresponding to the preprocessing is added to the document, and the document is added to the workspace corresponding to the attribute and/or the attribute value and is displayed as a thumbnail. It should be noted that list display may be performed instead of the thumbnail display.

The workspace as an addition destination of the document is determined as follows. For example, in a case where the workspace is prepared to correspond to a company, the document is automatically distributed to the workspace as the addition destination by referring to the attribute value (for example, a company name) of the attribute added to the document.

In addition, the above-described "preprocessing" includes, for example, optical character recognition/reader (OCR) processing. Processing of executing the OCR to recognize a text string in the document, adding the attribute and/or the attribute value to the document according to a result of the recognition, and adding the attribute and/or the attribute value to the workspace corresponding to the attribute and/or the attribute value is performed. For example, as the text string, a company name that is a transmission source of the document described in the document, a person in charge who is a transmission destination, a transmission date, a delivery date, and the like are recognized, the recognized company name, person in charge, transmission date, delivery date, and the like are added as the attribute or the attribute value. In addition, the type of the document, such as whether the document is an invoice or an order form, may be distinguished by the text recognition result, and the distinguished type may be used as the attribute or the attribute value. Information such as a format of data not depending on the text recognition result may be included in the attribute or the attribute value.

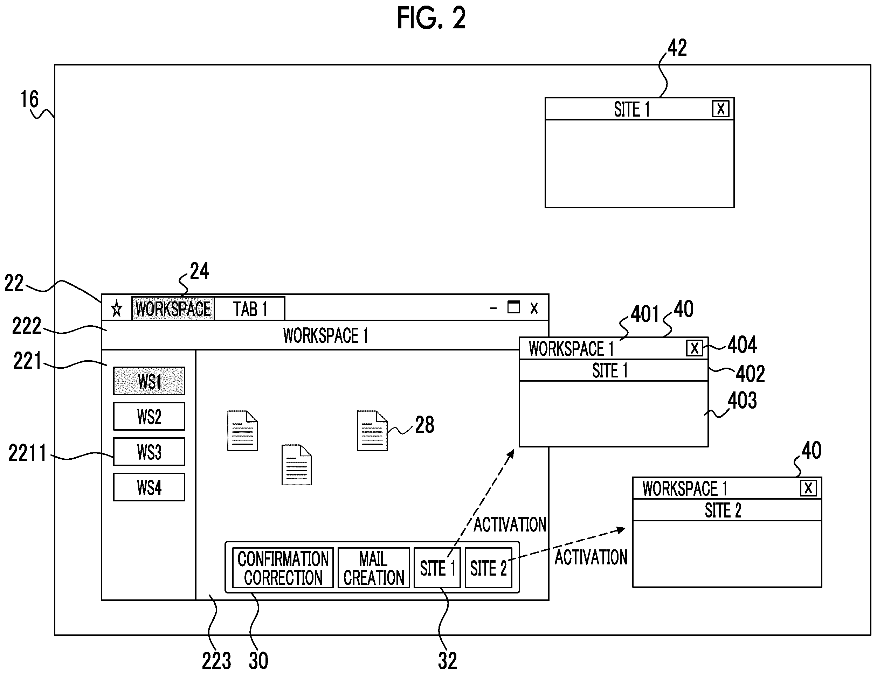

Here, the workspace and the tool used in the present exemplary embodiment will be described with reference to Fig. 2.

Fig. 2 is a diagram showing an example of a screen displayed on the PC 10 according to the present exemplary embodiment. A display screen 16 is a screen of the display of the PC 10. In a case where the user performs a predetermined operation to activate the general-purpose browser, a window (that is, the "first window" according to the exemplary embodiment of the present invention) 22 for the browser is displayed on the display screen 16 as shown in Fig. 2. Then, in a case where the workspace service 6 is activated in one tab 24 in the window of the browser, the workspace is displayed. It should be noted that, although a plurality of tabs 24 can be displayed in the window 22 of the browser, each of the tabs displayed in the window does not correspond to the window according to the present exemplary embodiment. The same applies to an input field for a URL or the like displayed in the window.

Since the browser usually has a function of displaying a name of the website or the like on the tab such that the website or the like activated can be grasped by the tab, as an example, a text string "workspace" is displayed on the tab 24 such that it can be grasped that the workspace service 6 is activated. In addition, any website or web application is opened in a tab 1 next to the tab 24 in which the workspace service 6 is activated (although a text string indicating the name or the like of the website or the like should normally be displayed as described above, the name of the website or the web application is simplified and shown as "tab 1" in the drawing).

It should be noted that, in the present exemplary embodiment, the content acquired from the cloud 2 is actually a web page described in a language such as hypertext markup language (HTML) acquired by the browser from the cloud 2. As shown in Fig. 2, examples of the content according to the present exemplary embodiment include a plurality of workspaces corresponding to workspaces having names "WS1" to "WS4" and various data (such as an icon 28 of the document and a toolbar 30) displayed on the WS1.

The window 22 in which the workspace service 6 is activated includes various display areas 221 to 223. In the display area 221, buttons 2211 corresponding to the displayed workspaces are displayed in a list in a selectable manner. A name for specifying the workspace is associated with each button 2211. In the display area 222, the name of the workspace selected as the display target from the display area 221 is displayed. It should be noted that, in the present exemplary embodiment, "WS" is an abbreviation of "workspace" and refers to a workspace. The icon 28 of the document managed in the workspace is displayed in the display area 223. In the present exemplary embodiment, the document is displayed by the icon 28, but it is not necessary to display the document by an image such as an icon, and for example, the document names may be displayed in a list. In the following description, the "icon 28 of the document" will be simply referred to as a "document 28".

In addition, the display of the window 22 includes the toolbar 30. The toolbar 30 is generated in association with the workspace as an example, and includes an icon 32 corresponding to each tool that is activated from the workspace. It should be noted that, in Fig. 2, the toolbar 30 is schematically shown, and a display form of the toolbar 30 is not limited to the display example shown in Fig. 2.

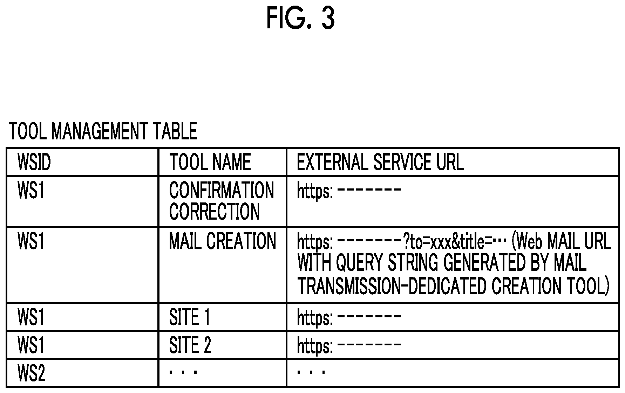

Fig. 3 is a diagram showing a data configuration example of the tool management table according to the present exemplary embodiment. The tool management table is stored in the storage unit 15 as described above. In the tool management table, information on the tool represented by the icon 32 is registered in the toolbar 30. In the tool management table, as identification information (ID) of the corresponding workspace, a workspace name, identification information of the tool in which the icon is set to the toolbar 30, which is a tool name as the text string displayed in the toolbar 30, and an external service uniform resource locator (URL) as information for specifying an access destination to be accessed in a case where the icon of the tool is selected by the user are set in association with each other. The user can set and register the information on the tool to be set in the toolbar 30 in the tool management table by inputting a predetermined item from a predetermined screen (not shown) for managing the toolbar, such as registration and deletion of the tool. Here, regarding the external service URL set in the tool management table, a setting of using information based on information on the workspace and/or information on a document attribute will be described.

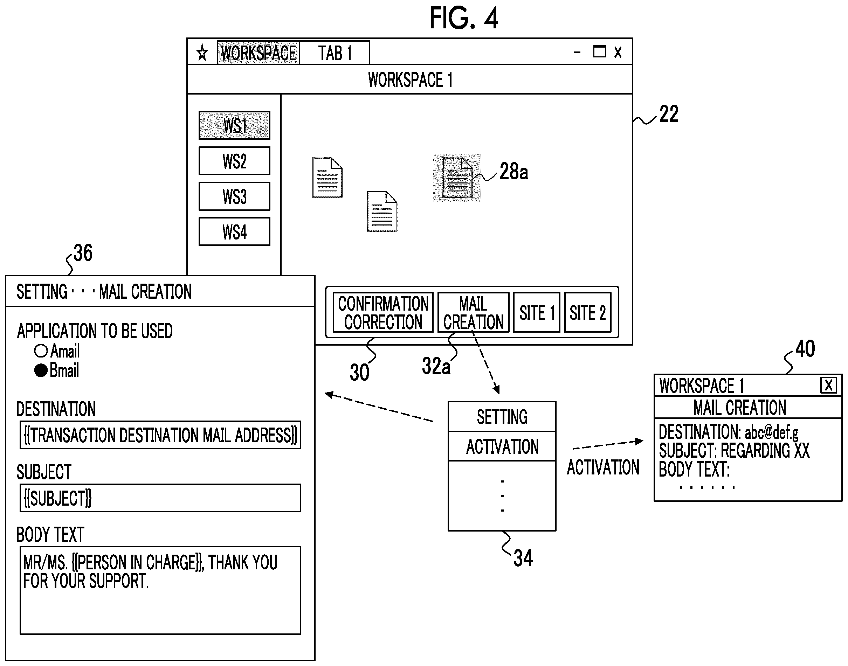

Fig. 4 is a diagram showing an operation in a case where additional processing is performed on a URL for accessing a mail transmission service as a mail transmission tool, regarding a software/mail transmission tool which is named "mail creation" and has a mail function set in the toolbar 30. For example, in a case where an icon 32a of "mail creation" is right-clicked, the workspace execution processing unit 11 displays a pull-down menu 34 and receives an operation for setting a tool corresponding to the icon 32a of "mail creation". It should be noted that the screen display may be performed by the user interface unit 13 in response to an instruction from the workspace execution processing unit 11, but for the sake of simplifying the description, it is described that the workspace execution processing unit 11 performs the display.

The workspace execution processing unit 11 displays a setting screen 36 by selecting "setting" from the pull-down menu 34. The user can set an application of a web mail to be used for the mail transmission (however, the application of the web mail may be specified by the external service URL) and templates of "destination", "subject", and "body text" of the mail from the displayed setting screen 36. On the setting screen 36, the destination, the subject, and the body text each indicate that the mail transmission tool is activated in a state where the settings corresponding to the destination, the subject, and the body text are performed in advance in a case where the mail transmission tool is activated. The destination of { {transaction destination mail address} }, the subject of {{subject}}, and the body text of { {person in charge} } are variables in the template, and it is indicated that information on the workspace or information based on the document attribute is an input value of this portion. In a case where such a setting is performed, in a case where the user performs an operation of activating the mail transmission tool in a state where the user selects any document 28a, the workspace execution processing unit 11 inserts, into the variable in the template, information corresponding to the variable in the template (that is, information corresponding to the destination, the subject, and the person in charge in a case of Fig. 4) in the information based on the workspace (for example, attribute information of the workspace) or the information on the document attribute of the document 28a. As the processing on the external service URL, in a case where the user performs the operation of activating the mail transmission tool in a state where the user selects any document 28a, the workspace execution processing unit 11 adds the information corresponding to the variable in the template as a query string to the external service URL of the web mail corresponding to the mail transmission tool such that the mail transmission tool is activated in a state where the setting performed on the setting screen 36 is performed in advance, and designates the final external service URL to activate the mail transmission tool.

In the present exemplary embodiment, the mail transmission tool can be activated in a state where the text string composed of the template and the document attribute is input to the transmission screen 40 of the web mail, and the mail transmission tool is displayed on the transmission screen 40 which is a window separate from the workspace, that is, a window displayed as a result of activating the application of the web mail. It should be noted that, although described later, the transmission screen 40 shown in Fig. 4 corresponds to the window 40 shown in Fig. 2.

In the present exemplary embodiment, although the mail is described as the tool in which the display content is displayed in the second window in a state in which the setting based on the information on the first content or the information on the file acquired from the file is performed in a case where the user displays the second window in a state where the file is selected in the workspace which is the first content, the present invention is not limited to the mail. The present invention can be applied to a tool other than the mail as long as the tool requires some parameter setting at the time of execution.

It should be noted that, in the present exemplary embodiment, in a case where the operation of activating the mail transmission tool is performed in a state where the document 28a is not selected, or in a case where the mail transmission tool is attempted to be activated in a state where the information is not inserted into the variable in the template due to a reason that the corresponding variable is not acquired in the template, the workspace execution processing unit 11 may display a warning dialog (not shown). In the warning dialog, the setting of the variable that is not acquired may be prompted. In addition, in a case where an "OK" button included in the warning dialog is pressed, the workspace execution processing unit 11 may activate the transmission screen 40 in an incomplete state, for example, by making portions corresponding to the variables in the template (that is, portions corresponding to the destination, the subject, and {{person in charge}} in the body text) blank in the transmission screen 40 of the web mail, or displaying the variables in the template as {{transaction destination mail address}}, {{ subject}}, and {{person in charge} }. It should be noted that the template does not necessarily include the variable, and in the setting screen 36, for example, a specific mail address that does not include the variable may be input in advance as the destination, or a predetermined text string may be input as the subject and the body text. In this case, the mail transmission tool is activated in a state where the identical setting is performed in advance without depending on which document is selected.

It should be noted that, regarding the addition of the information corresponding to the variable in the template, in a case where the information for the addition can be acquired, the document 28 need not be selected in the addition of the information. For example, in a case where information on the workspace is used as the input value of the variable instead of the information based on the attribute value of the document, the information should be uniquely determined for each workspace without depending on the selection of the document. In such a case, in a case where the query string is added to the external service URL, it is not always needed to select the document 28. In this way, in a case of setting the tool, by only copying and pasting the setting of the external service URL related to the tool for each workspace, the tool in which each setting is performed for each workspace (that is, information on each workspace is the input value of the variable) can be activated.

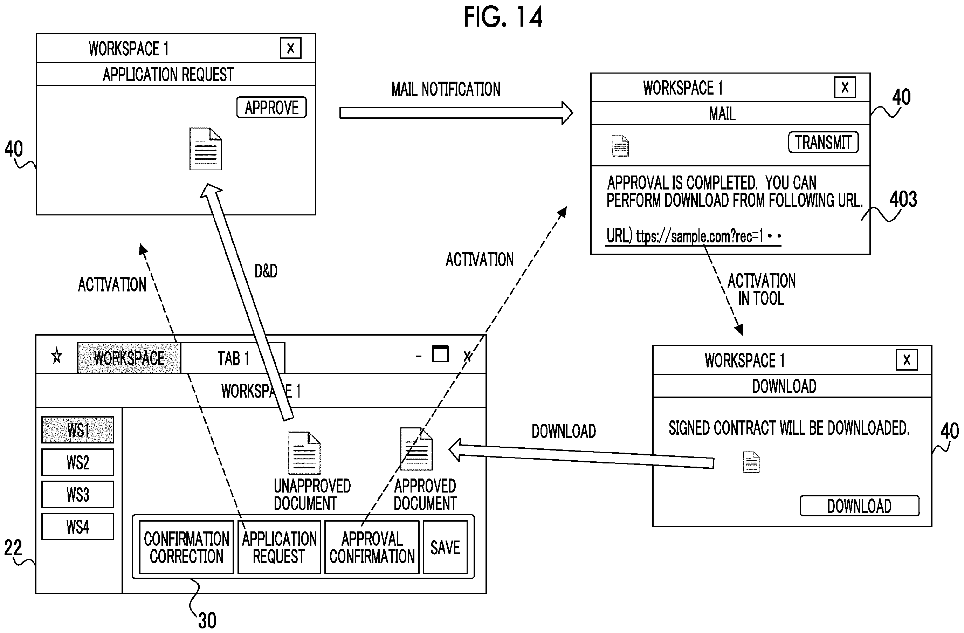

Returning to Fig. 2, the window 40 that is assigned to correspond to the tool that is activated in response to the user operation on the toolbar 30 is further displayed in the display screen 16. In this way, the window 22 is assigned to each tool separately from the window 22 of the browser in which the workspace is displayed. The window 40 is activated in an initial setting state. In the present exemplary embodiment, a size and a display position of the window 40 are included in the initial setting as a state of the window 40, but other setting contents may be included. The window 40 includes various display areas 401 to 403 that are activation screens of the tools. In the display area 401, the name of the workspace is displayed such that the fact that the tool is activated from the workspace can be understood. That is, since the window 22 to be activated is a window in which the website or the like is displayed, even in a case where the user operation on the toolbar 30 of the workspace is not performed, the identical content as the content displayed in the window 40 can be displayed, for example, by inputting the URL into any browser and performing the access via the Internet (for example, the same display can be performed in a case where the URL is input into the tab 1 next to the tab in which the workspace service 6 is activated, and then an operation of displaying the tab 1 in an independent window, which is usually included in the general-purpose browser, is performed). However, since the name of the workspace is added to the window 22 displayed through the user operation on the toolbar 30 of the workspace, the display area 401 is provided such that whether the tool assigned to the window 40 is activated and displayed from any browser without going through the workspace or is activated via the workspace can be understood. For example, as shown in Fig. 2, the name of the workspace is not added to a window 42 associated with the website that is activated without passing through the workspace 1. In addition, in a case where a link URL to the website 8 is further included in the tool (in the window associated with the tool) that is activated in response to the user operation with respect to the toolbar 30, the website 8 that is accessed and displayed by selecting the link URL may be displayed by assigning a separate window and adding the name of the workspace as in the display aspect of the window 40 that is assigned to correspond to the tool that is activated in response to the user operation on the toolbar 30 (see Fig. 14). In the display area 402, a name for specifying the tool is displayed (for example, as in a case where the website is accessed by any browser, a URL or the like of the website is displayed). The display area 403 is a display area used by the tool.

The window 40 associated with the tool is displayed as a window separate from the window 22 in which the workspace is displayed as described above. The window 40 is displayed basically according to the initial setting. However, in a case where the identical initial setting value is set for all the windows 40 and a plurality of Web Views are displayed, the windows 40 are displayed at the identical size and at the identical position. Therefore, in a case where the workspace execution processing unit 11 displays the window 40 by assigning the window 40 to the tool, the workspace execution processing unit 11 may appropriately set the initial setting value for each window 40 to be displayed such that the windows 40 do not overlap each other.

For example, the number of windows 40 that are started up may be counted, and the display position of the initial setting value of the window 40 may be updated according to the count value. Alternatively, in a case where the fact that the display position of the initial setting value set in the window 40 to be displayed overlaps the window 40 already displayed is detected, the display may be performed after the display position of the initial setting value is updated such that the windows 40 do not overlap each other.

The window 40 is closed by the user selecting a predetermined button in the window 40, in Fig. 2, a close button 404 indicated by "×" (cross) at the upper right of the window 40. The same applies to a case of closing a window that is activated by a normal browser.

In the present exemplary embodiment, "closing" the window means that the display of the window is terminated by operating the close button 404 or the like for closing the window, the close button 404 being provided in the window. As a result, the tool being activated in the closed window is also terminated. In addition, a "hidden" state of the window described later means a state where the window is not displayed in response to the switching of the workspace (that is, even though the close button 404 or the like provided in the window 40 is not pressed). In addition, in a case where the window can be minimized (for example, in a case where a button for minimizing the window is provided in the window), a state where the window is minimized also corresponds to "hidden" of the window. Regarding the state of the tool in this case, it does not matter whether the tool is continuously activated in the background or the activation is terminated.

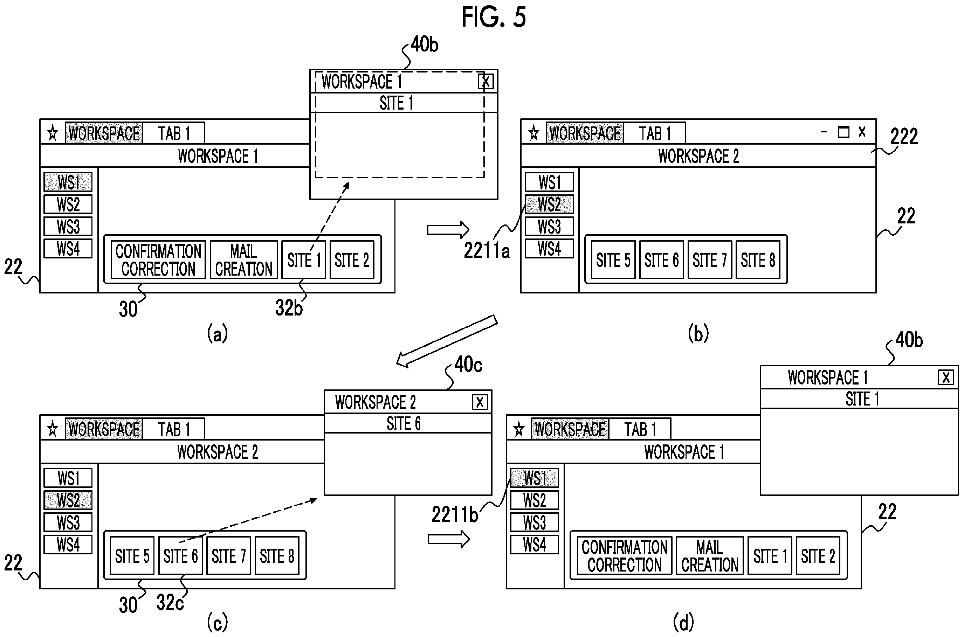

Hereinafter, an operation of the present exemplary embodiment will be described. First, basic operations according to the present exemplary embodiment will be described using a transition of the screen display shown in Fig. 5.

In Fig. 5, among the display contents of the display of the PC 10, the window 22 of the browser in which the workspace is displayed and the window 40 of the Web View that is activated in response to the user operation in the workspace are extracted and shown (the window 42 in which the website activated from any browser is displayed is not shown). The workspace execution processing unit 11 performs the display control of the screen shown in Fig. 5. In a case where the user selects an icon 32b of a site 1 from the toolbar 30 of the displayed workspace 1, the workspace execution processing unit 11 displays a window 40b by assigning the window 40b generated according to the initial setting value to the site 1 that is activated in response to the user operation. In (a) of Fig. 5, the window 40b in this case is indicated by a dotted line. Then, the user may change the state of the window 40b from the initial setting state as necessary. In (a) of Fig. 5, the window 40b in a state where the position and the size are changed from the initial setting state (that is, the state indicated by the dotted line) is indicated by a solid line.

Subsequently, as shown in (b) of Fig. 5, in a case where the user selects a button 2211a corresponding to the workspace 2 from the display state shown in (a) of Fig. 5, the workspace execution processing unit 11 switches the display of the window 22 to the content of the workspace selected by the user. It should be noted that the fact that the display in the window 22 is switched from the workspace 1 to the workspace 2 can be understood from the display content of the display area 222. In a case where the display in the window 22 is switched from the workspace 1 to another content in response to the user operation of selecting the button 2211a, the workspace execution processing unit 11 holds the state of the window 40b associated with the workspace 1, hides the window 40b, and displays the other content, here, the workspace 2.

It should be noted that since the display of the window 22 need only be finally switched from (a) of Fig. 5 to (b) of Fig. 5 in response to the user operation, the workspace 2 may be displayed and then the window 40b may be hidden in contrast to the above. The same applies to display switching described later.

The held state of the window 40b (also referred to as a "Web View state") is the display position and the size of the window 40b, and is stored in the storage unit 15. In a case where the state of the window 40b is changed from the state according to the initial setting value, the changed state is held. In a case where the plurality of Web Views are activated, the state of the window corresponding to each Web View is held. Of course, the other states may be held together.

Subsequently, as shown in (c) of Fig. 5, in a case where the user selects an icon 32c of a site 6 from the toolbar 30 of the workspace 2 from the display state shown in (b) of Fig. 5, the workspace execution processing unit 11 displays a window 40c by assigning the window 40c generated according to the initial setting to the site 6 that is activated in response to the user operation.

Subsequently, as shown in (d) of Fig. 5, the workspace execution processing unit 11 switches the display in the window 22 from the workspace 2 to the workspace 1 in response to the user operation of selecting a button 2211b from the display state shown in (c) of Fig. 5. The display switching can be referred to as an operation of returning the display in the window 22 to the original workspace 1.

In a case where the display in the window 22 is returned to the display of the workspace 1 from the workspace 2 in response to the user operation of selecting the button 2211b, the workspace execution processing unit 11 holds the state of the window 40c associated with the workspace 2, hides the window 40c, and displays the other content, that is, the workspace 1.

In a case where the workspace 1 is displayed, the workspace execution processing unit 11 recognizes that the window 40b of the site 1 is displayed in association with the workspace 1 before the workspace 1 is switched to the workspace 2 that is another workspace, by referring to the Web View state of the Web View associated with the workspace 1, which is stored in the storage unit 15. In this case, the workspace execution processing unit 11 redisplay the window 40b displayed corresponding to the site 1, in a state before being hidden. That is, the workspace execution processing unit 11 displays the window 40b at the display position and the size of the window 40b held in the storage unit 15.

As is clear from the comparison between (a) of Fig. 5 and (d) of Fig. 5, a work environment in the workspace 1 is reproduced in a state before being switched to the workspace 2. Therefore, even in a case where the display of the window 22 is temporarily switched to the workspace 2, the user can resume the work from the state before the display is switched.

It should be noted that, in the present exemplary embodiment, as described using Fig. 5, a case where the workspace 1 is switched to the other workspace 2 is described as an example of switching the display content of the first window, but the present invention can also be applied to a case of selecting a tab other than the "workspace" to switch the display to the content in the other tab from the workspace 1. That is, even in a case where another tab is selected from a state where the workspace 1 is displayed, to switch the display content of the first window to the content corresponding to the other tab, and then the display content of the first window is set in the workspace 1 again by selecting the tab of the workspace, the same processing is performed on the window 40b.

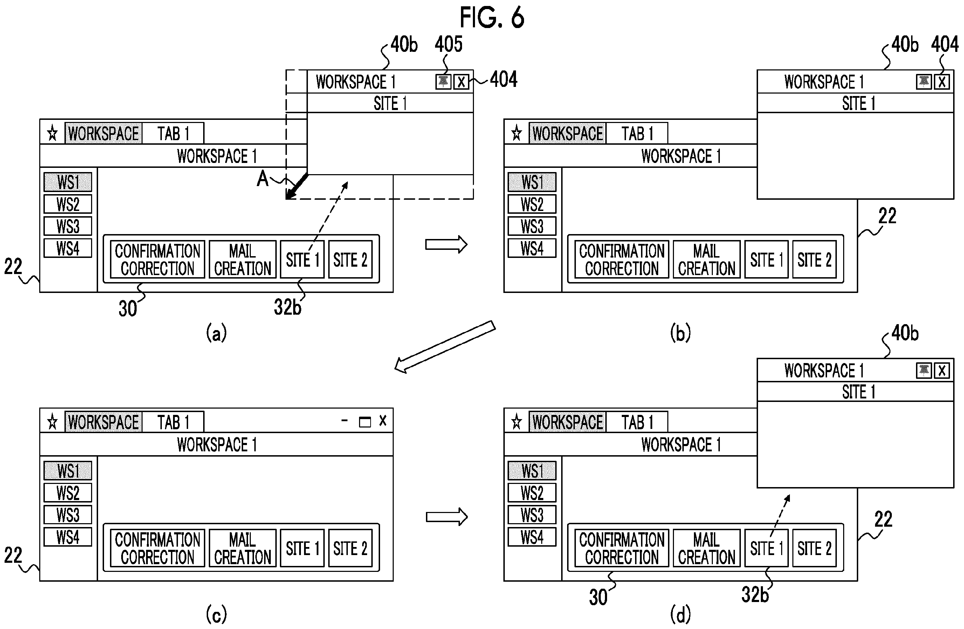

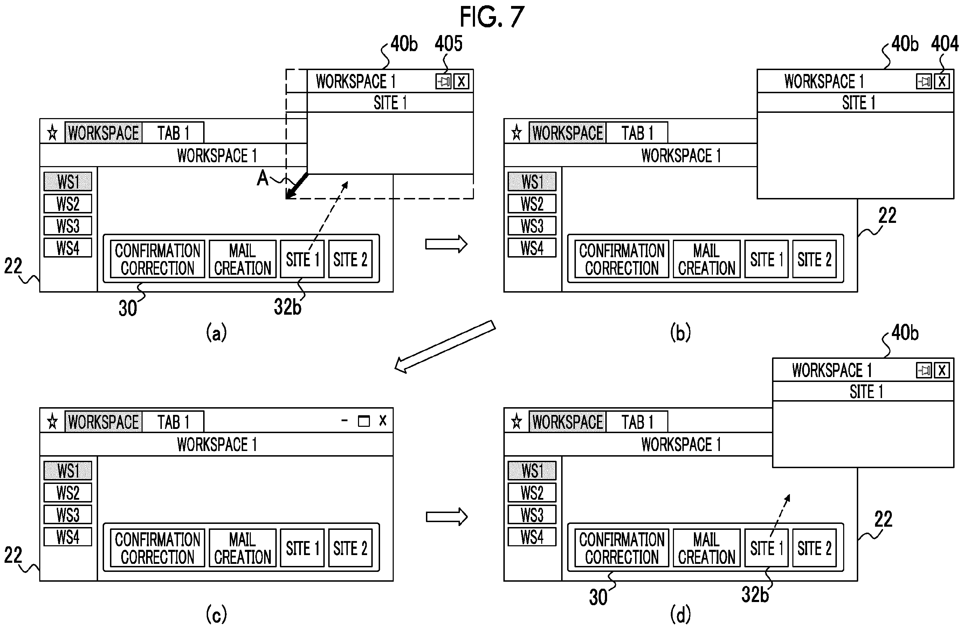

Next, an additional function of the present exemplary embodiment will be described with reference to Figs. 6 and 7. In Figs. 6 and 7, only a display portion of the display screen 16 shown in Fig. 2 is extracted and shown as in Fig. 5.

A button 405 is displayed parallel to the close button 404 on the upper right of the window 40b shown in Fig. 6. This point is different from Fig. 6.

The button 405 is a display element displayed to be selectable by the user. In a case where the button 405 included in the window 40b is selected by the user before being hidden, as a specific operation on the window, the workspace execution processing unit 11 regards the window 40b as being set as a special window by the user, and performs display control different from the display control on the normal window 40 that is not set as the special window by the user. Fig. 7 shows the button 405 in a state where the additional function is not set. The user can recognize whether or not the window is set as the special window from the difference in the display form of the button 405. The workspace execution processing unit 11 may hold and manage the presence or absence of the setting of the special window with respect to the window 40b by using the storage unit 15.

The workspace execution processing unit 11 performs the display control of the screen shown in Fig. 6. As shown in (a) of Fig. 6, in a case where the user selects the icon 32b of the site 1 from the toolbar 30 of the displayed workspace 1, the workspace execution processing unit 11 displays the window 40b by assigning the window 40b to the site 1 that is activated in response to the user operation. Then, the user selects the button 405 as the specific operation on the window, and sets the window, which is a target of the specific operation, as the special window. Accordingly, the workspace execution processing unit 11 controls the window 40b set as the special window to be displayed on the foreground over the windows corresponding to the other Web Views. In a case where a plurality of windows 40b are started up and displayed to individually display the display contents of a plurality of tools, respectively, as the plurality of tools are activated from the workspace 1, the workspace execution processing unit 11 displays the window 40b set as the special window among the plurality of windows 40b on the foreground. In a case where the user sets the window 40 corresponding to the tool of which the display content is always to be confirmed as the special window, the window is always displayed on the foreground, which is convenient. In addition, the window 40b in which the button 405 is set is processed as follows in addition to the processing of being displayed on the foreground.

In a case where the user selects the close button 404 of the window 40b, the tool execution processing unit 12 terminates the execution of the tool of the site 1, and the workspace execution processing unit 11 closes the window 40b. In a case where the window 40b is closed, the workspace execution processing unit 11 confirms whether or not the window 40b is set as the special window. Then, in a case where the window 40b is set as the special window, the workspace execution processing unit 11 closes the window 40b by updating the initial setting value of the window stored in the storage unit 15 in a state where the window 40b is closed.

Thereafter, in a state of the display shown in (c) of Fig. 6, in a case where the user selects the icon 32b of the site 1 from the toolbar 30, the workspace execution processing unit 11 generates the window 40b with reference to the initial setting value updated and stored in the storage unit 15, and displays the generated window 40b by assigning the window 40b to the tool of the site 1. (d) of Fig. 6 shows a state where the window 40b is displayed. For example, in a case where the window 40b is operated as an arrow A and the display position and the size thereof are changed and the window 40b is a window closed in a state of being set as the special window in (a) of Fig. 6, as is clear from the comparison of the windows 40b in (c) of Fig. 6 and (d) of Fig. 6, the window 40b assigned to the reactivated site 1 is in the identical state as before the closing, that is, the display position and the size of the window 40b are identical to the display position and the size at the time of closing (in other words, the display position and the size of the window 40b shown in (b) of Fig. 6). It should be noted that, in a case where such processing is executed, a timing at which the window 40b is set as the special window may be before or after the state of the window 40b is changed.

Fig. 7 shows a screen transition in a case where the window 40b is closed in a state where the specific operation is not executed on the window, that is, the window 40b is not set as the special window, as compared with Fig. 6. In a case where the site 1 is activated in response to the user operation, the workspace execution processing unit 11 generates the window 40b by referring to the initial setting value (that is, the initial setting value that is not updated) stored in the storage unit 15, and displays the generated window 40b by assigning the window 40b to the tool of the site 1. Here, since the window 40b is closed in a state where the window 40b is not set as the special window, the workspace execution processing unit 11 generates the window 40b according to the initial setting value that is not updated, and displays the window 40b by assigning the window 40b to the tool 1. That is, in (d) of Fig. 7, the window 40b is generated as shown in a solid line in (a) of Fig. 7 and is displayed by being assigned to the tool 1. As described above, in a case where the window 40b is closed without the specific operation being performed, that is, without the button 405 being selected and the window 40b being set as the special window after a state of the window 40b is changed after the window 40b is displayed, the workspace execution processing unit 11 need not update the initial state of the closed window 40b.

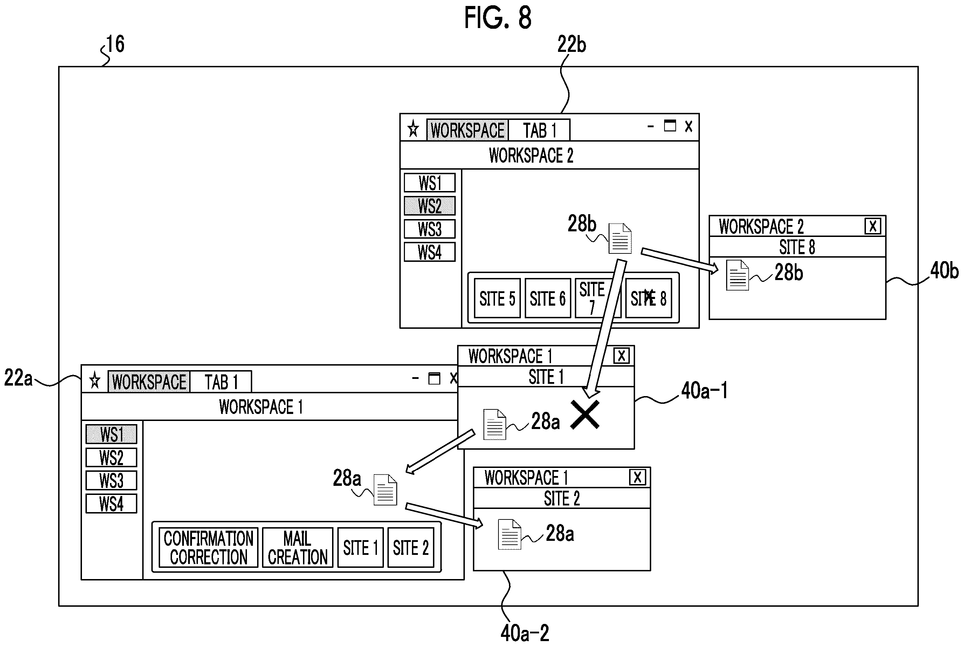

Next, other basic operations in the exemplary embodiment will be described using a screen display example shown in Fig. 8.

Fig. 8 shows a screen example in a case where two browsers are activated on the display screen 16 of the PC 10, the workspace service 6 is activated in each browser, the workspace 1 is displayed in one window 22a, and the workspace 2 is displayed in the other window 22b. In response to the two tools of the site 1 and the site 2 being activated corresponding to the workspace 1, two windows 40a-1 and 40a-2 are displayed. On the other hand, in response to one tool of the site 8 being activated corresponding to the workspace 2, one window 40b is displayed. In the present invention, in a case where the display of the workspace is switched as described above, the workspace after the switching is displayed, and the Web View associated with the workspace displayed before the switching is hidden. Therefore, the site 1 and the site 2 associated with the workspace 1 and the site 8 associated with the workspace 2 should not be displayed simultaneously. However, in a case of Fig. 8, since two browsers are activated and the workspace service 6 is accessed by each browser, the Web Views associated with the respective workspaces are allowed to be displayed simultaneously.

Here, in the present exemplary embodiment, the workspace execution processing unit 11 and the tool execution processing unit 12 can perform document management described later in cooperation with each other under the control of the control unit 14.

For example, in the present exemplary embodiment, the document 28a, which is the file stored on the site 1, can be moved to the workspace 1 associated with the window 40a-1 by a predetermined user operation such as drag and drop (D&D), so that the file can be duplicated in the workspace 1. In a case where the file of the site 1 is duplicated in the workspace 1 by D&D, processing need only be defined in advance, for example, such that, in response to the movement of the file of the site 1 to the workspace 1 by D&D, the series of processing of downloading the file once to a folder (hereinafter, referred to as a download folder) set as a default storage destination on the PC 10 in a case where the file is downloaded from the browser, then uploading the file from the download folder to the workspace 1 and stored, and then deleting the file from the download folder is automatically executed.

In addition, in a case of downloading the data from the browser, for example, a method is generally known in which an operation item such as "save as" is selected from a context menu displayed by performing an operation such as a right click on the data displayed on the browser, to download the data. The file downloaded in this case is usually stored in the download folder described above. In the present exemplary embodiment, in a case where the processing of downloading the file in this way is an operation of "acquiring the file on the software" distinguished from the above-described operation of performing D&D of the file to the workspace, in the present exemplary embodiment, the file downloaded by the operation of "acquiring the file on the software" from the website 8 opened in the Web View such as the site 1 may be duplicated in the workspace associated with the Web View. In this case as well, processing need only be defined in advance such that, in response to the operation of "acquiring the file on the software", the series of processing of downloading the file, which is the target of the operation on the Web View associated with the workspace 1, once to the download folder, then uploading the file from the download folder to the workspace 1, and then deleting the file from the download folder is automatically executed. However, in a case where the operation of acquiring the file on the software is performed, and the user explicitly specifies that the storage destination (that is, a download destination) of the file is a location other than the above-described download folder by an operation, the file need not be uploaded to the workspace 1. The reason is that, in such a case, the user does not always want to duplicate the file to the workspace 1.

It should be noted that, in the above description, as the operation of "acquiring the file on the software", the operation of selecting the operation item such as "save as" from the context menu displayed by performing the operation such as the right click on the data displayed on the browser is described, but any operation may be used as long as the operation is distinguished from D&D. For example, the operation may be processing of pressing a download button provided in association with the file on the screen of the website 8 displayed on the browser.

In this way, in a case where the file stored in the website activated by the Web View is downloaded, the file acquired on the website activated by the Web View can be saved in the workspace corresponding to the Web View without the user manually designating a storage (duplication) destination of the file. Therefore, for example, in a case where the above-described operation is performed on the website 8 in Fig. 8, since the website 8 is the Web View associated with the workspace 2, the file is duplicated in the workspace 2.

In the present exemplary embodiment, the document 28a imported in the workspace 1 can be stored in the website 8 opened in the Web View, such as the site 2, by a predetermined user operation such as drag and drop. In the present exemplary embodiment, in a utilization scene in which the document 28a is stored in the site 2, in a case where the document is dragged and dropped from the workspace 1 to the site 2 that is the Web View, the document 28a is duplicated (stored) in the site 2. In reality, since the workspace according to the present exemplary embodiment is the cloud-type workspace, the series of processing of downloading the document 28a from the cloud 2 to the local of the PC 10 (for example, the download folder described above) and uploading the downloaded document 28a to the site 2 being displayed in the Web View is executed. In this case, the document 28a downloaded to the PC 10 is deleted at a point in time at which the storage of the document in the site 2 is completed, and thus an unnecessary file is not left on the PC 10.

In this way, by the cooperative operation of the workspace execution processing unit 11 and the tool execution processing unit 12, the file can be exchanged between the window 22a in which the workspace 1 is displayed, and each of the windows 40a-1 and 40a-2 of the site 1 and the site 2 displayed in response to the user operation in the window 22a.

The above-described processing is similarly applied even in a case where the document is dragged and dropped from the window 22b of the workspace 2 to the window 40b of the site 8. However, for example, as shown in Fig. 8, in a case where the document is dragged and dropped from the workspace 2 to the site 1, which is the Web View associated with a different workspace 1, the exchange of the file between the workspace and the tool not associated with the workspace may not be able to be performed, for example, the document may not be able to be stored in the site 1.

It should be noted that, for example, in a case where the document 28a included in the workspace 1 is dragged, the display of the windows 40a-1 and 40a-2 of the Web Views that can be a drop destination may be made distinguishable from the display of the window 40b of the Web View that cannot be a drop destination, to present the Web View that can be dropped to the user by focusing on the Web View that can be dropped. In addition, in a case where the document 28a is dragged and superimposed on the window 40a-1 or 40a-2 of the Web View, the superimposed window of the Web View may be presented to the user by focusing on the superimposed window of the Web View. The "focus" means that the display form is changed by performing the emphasized display such as increasing the brightness of a frame of the window 40, changing a display color, slightly changing a window size, or blinking.

In a case where the operation of minimizing the window (corresponding to the "first window") corresponding to the application to be activated on the PC is generally executed, the second window may also be hidden. The term "minimization" herein means that the same processing as in a case where a minimize button (generally, a button having a "-" shape) displayed on the upper right of the general window is selected need only be performed, and the application being activated is not terminated, but a screen on which the application is activated is hidden or the display of the application on the screen is made small. The "hidden" is as described above.

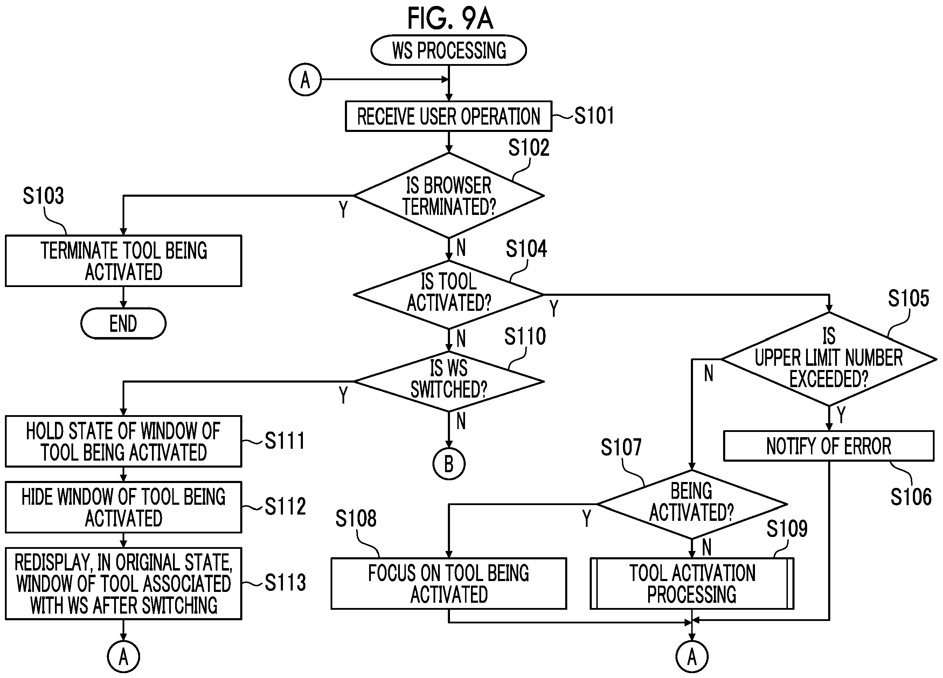

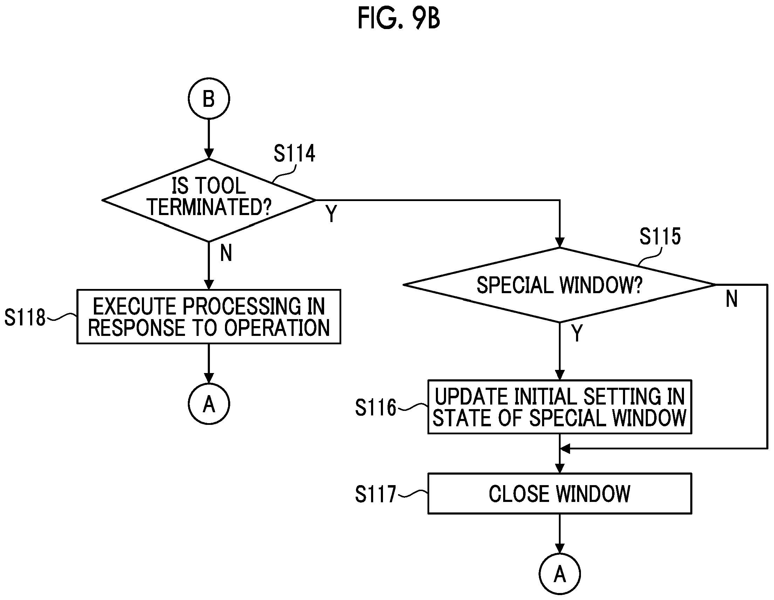

Hereinafter, in the present exemplary embodiment, processing executed by using the workspace will be described with reference to flowcharts shown in Figs. 9A to 11. Since the processing described here has already been described using the screen display examples shown in Figs. 2 and 4 to 8, the description thereof will be appropriately omitted in a case where the description thereof is redundant. Here, the processing will be described on an assumption that the user displays the screen shown in Fig. 2.

As described above, the user performs various operations on the display screen 16, and the user interface unit 13 receives the user operation (step S101). In a case where the user performs an operation of terminating the activated workspace (abbreviated as "WS" in the flowchart) or browser (Y in step S102), the processing is terminated by terminating the workspace being activated and the tool activated from the workspace (in step S103).

In a case where the user operates the toolbar 30 of the workspace to activate the tool (N in step S102 and Y in step S104), the workspace execution processing unit 11 acquires the number of tools being activated (that is, the number of displayed Web Views) and, in a case where the number of tools being activated exceeds an upper limit number of tools that can be simultaneously executed (that is, the number of tools that can be displayed) (Y in step S105), the workspace execution processing unit 11 notifies of an error with respect to the activation operation of the user (step S106). For example, an error message need only be displayed on the display screen 16. In the present exemplary embodiment, the upper limit number of tools that can be simultaneously executed from one workspace is set in this way, and the load on the PC 10 or the display area of the window 40 is taken into consideration.

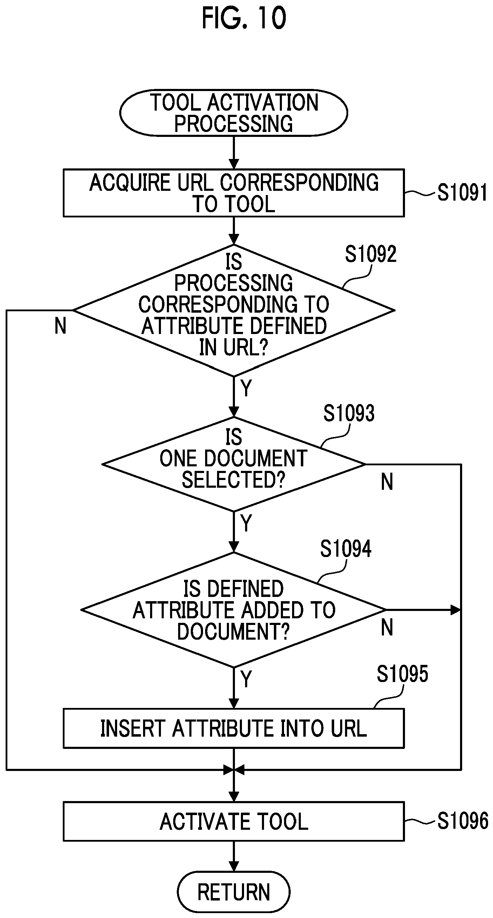

In a case where the number of tools being activated does not exceed the upper limit number (N in step S105), and the tool for which the activation instruction is given is being activated (Y in step S107), the workspace execution processing unit 11 focuses on the window 40 corresponding to the tool (step S108). By focusing on the window 40, it is possible to notify the user that the window 40 corresponding to the tool being activated is being displayed. In a case where the tool for which the activation instruction is given is not being activated (N in step S107), the workspace execution processing unit 11 executes the activation processing of the tool for which the activation instruction is given (step S109). The activation processing of the tool will be described with reference to a flowchart shown in Fig. 10.

The workspace execution processing unit 11 acquires the external service URL corresponding to the tool for which the activation instruction is given, with reference to the tool management table (step S1091). Here, whether or not the processing corresponding to the attribute and/or the attribute value is defined in the URL corresponding to the tool for which the activation instruction is given is confirmed. For example, a case where it is necessary to add a query to the end of the URL as in the mail creation in Fig. 3 corresponds to this definition. Here, in a case where the processing corresponding to the attribute and/or the attribute value is not defined for the URL, such as the tool other than the mail creation (N in step S1092), the workspace execution processing unit 11 activates the tool according to the setting of the external service URL in the tool management table (step S1096).

On the other hand, as in the mail creation in Fig. 3, in a case where the processing corresponding to the attribute and/or the attribute value is defined for the URL (Y in step S1092), in a case where the document is not selected or a plurality of documents are selected in a case where the tool is activated (N in step S1093), the workspace execution processing unit 11 activates the tool without setting the attribute and/or the attribute value in the URL (in step S1096). The reason is that, in the former case, the document from which the attribute and/or the attribute value is to be extracted is not specified. The reason is that, in the latter case, there is a possibility that the attribute and/or the attribute value to be set as the URL cannot be uniquely specified.

In addition, even in a case where one document is selected, in a case where the attribute and/or the attribute value to be set in the URL is not added to the document (N in step S1094), the workspace execution processing unit 11 cannot extract the attribute and/or the attribute value to be set in the URL, and thus the workspace execution processing unit 11 activates the tool without setting the attribute and/or the attribute value in the URL (step S1096).

Then, in a case where the attribute and/or the attribute value to be set in the URL can be extracted from one document (Y in step S1094), the workspace execution processing unit 11 inserts the text string corresponding to the attribute and/or the attribute value into the URL (step S1095), and then activates the tool for which the activation instruction is given (step S1096).

Returning to Fig. 9A, in a case where the user does not perform the operation of operating the toolbar 30 of the workspace to activate the tool (N in step S104), and performs the operation of switching the workspace (Y in step S110), as described using Fig. 5, the workspace execution processing unit 11 holds the state of the window 40 corresponding to the tool associated with the workspace as a switching target (step S111), and then sets the window 40 to the hidden state (step S112). Subsequently, the workspace execution processing unit 11 displays, in the window 22, the workspace as the display content after the switching, and in a case where the displayed workspace has been previously displayed, the workspace execution processing unit 11 refers to the Web View state to redisplay the window 40 corresponding to the tool associated with the workspace in the original state (step 5113).

In addition, in a case where the user operation is the operation of terminating the tool (Y in step S114) and the window 40 to which the tool is assigned is set as the special window (Y in step 115), the workspace execution processing unit 11 updates the initial setting in the state of the closed window 40 to hold the updated initial setting as the initial state of the window assigned in a case where the tool is next activated (step S116), as described with reference to Fig. 6. Thereafter, the workspace execution processing unit 11 closes the window 40 of the tool to terminate the tool (step S117).

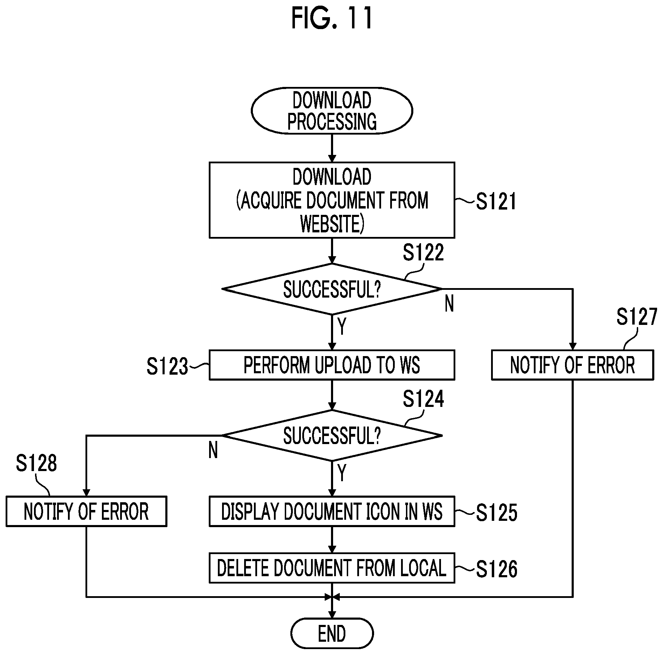

Next, processing of exchanging the document between the workspace and the tool will be described with reference to a flowchart shown in Fig. 11. Since this processing is described using the screen display example shown in Fig. 8, the repeated description will be appropriately omitted.

The tool execution processing unit 12 downloads the document from the website 8 in response to the user operation (for example, the operation of acquiring the file on D&D or the software described above) (step S121). The downloaded document is temporarily stored in the download folder or the like of the local PC 10 from the website 8. In a case where the download is successful (Y in step S122), the tool execution processing unit 12 uploads the document to the workspace (step S123).

In a case where the upload is successful (Y in step S124), the workspace execution processing unit 11 displays the icon of the acquired document in the display area 223 of the workspace (step S125). On the other hand, in a case where the document is uploaded to the cloud-type workspace, the tool execution processing unit 12 deletes the document acquired from the website 8 on the cloud 2 and saved in the local PC 10. This processing can be regarded as processing of duplicating the document from the website 8 to the workspace.

In a case where the download fails (N in step S122), the tool execution processing unit 12 notifies the user of the occurrence of the error, for example, by displaying the error message on the window 40 (step S127). Examples of a case where the download of the document fails include a case where the download is blocked and a case where the tool is terminated during the download.

In addition, in a case where the upload fails (N in step S124), the workspace execution processing unit 11 notifies the user of the occurrence of the error, for example, by displaying the error message in the window 22 (step S128). Examples of a case where the upload of the document fails include a case where there is no write permission (for example, permission to store the document) to the workspace, a case where the workspace is co-managed by other users and the document is deleted by the other user immediately before the upload, a case where a local temporary file is deleted for some reason before the start of the upload to the workspace, a case where the generation of a temporary folder fails due to a local capacity upper limit, a case where the capacity upper limit of the workspace is exceeded at the time of the document upload, and a case where the size of the document to be uploaded exceeds an upper limit value of the workspace.

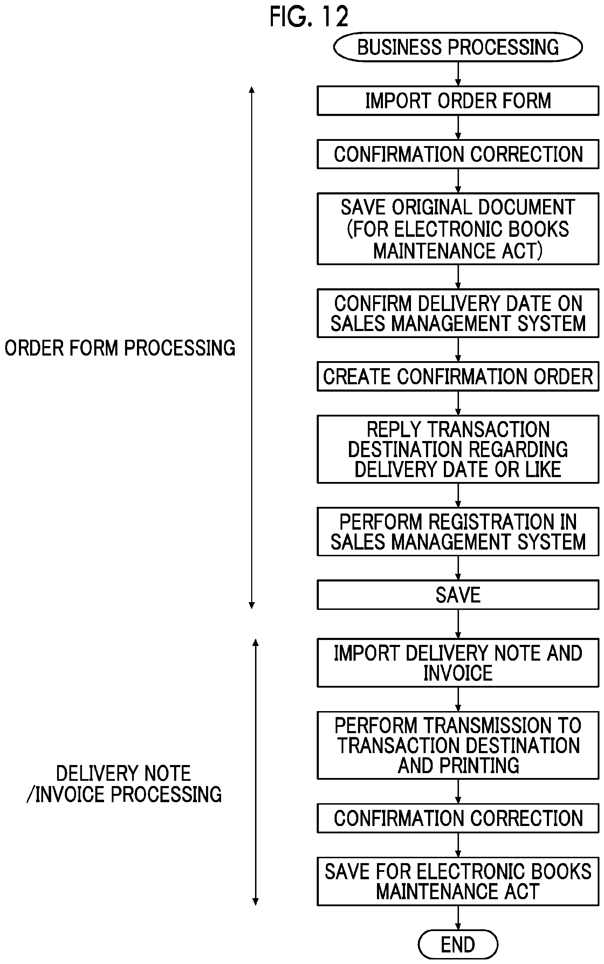

The processing related to the workspace described above can be applied to typical businesses of order receipt to delivery date answer and delivery note/invoice issuance and save, which will be described later. A simple flow of business processing of handling this document is shown in a flowchart shown in Fig. 12.

In the operation shown in Fig. 12, the management of the document in general is performed by using the workspace, but the import of each document using the mail, the FAX, the scan, or the like and the transmission of each document to the transaction destination using the mail, the FAX, the print, or the like can be executed by using the Web View. In addition, the exchange with the sales management system may be performed by the workspace, or a dedicated tool may be used.

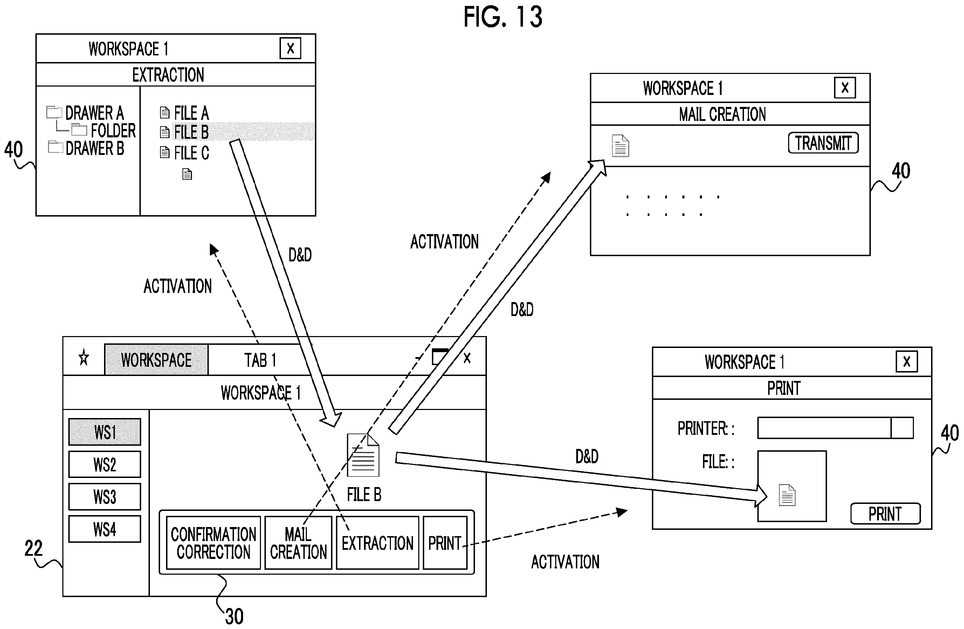

Fig. 13 is a diagram more specifically showing a part of the above-described business processing by using a screen display example. For example, the user activates an "extraction" tool to activate software that is the storage destination of the file as the Web View associated with the "extraction" tool. Then, the document (file B) as a processing target is selected from a predetermined storage destination on the software that is activated as the Web View, and the document (file B) is imported (duplicated) in the workspace 1 by the D&D operation or the operation of acquiring the file on the software. Subsequently, the user activates a "mail creation" tool to activate the software having the mail function as the Web View associated with the "mail creation" tool. Then, the imported file B is dragged and dropped to the Web View to upload the file B, that is, to attach the file B to the mail. Thereafter, the mail is transmitted to the transaction destination. In addition, the user activates a "print" tool, activates software for print management as the Web View associated with the "print" tool, uploads the file B by dragging and dropping the file B to the Web View, and prints the file B by executing a print operation on the Web View.

In this way, tools for performing various types of processing on the file held and managed in the workspace can be set in the toolbar 30, and a desired tool can be activated at a necessary timing in a process of the business processing. In the present exemplary embodiment, since the file can be exchanged between the workspace and the tool by a simple user operation such as drag and drop between the window 22 of the workspace and the window 40 of the tool, the efficiency is improved.

Fig. 14 is a diagram more specifically showing another part of the above-described business processing by using the screen display example. For example, the user activates an "application request" tool to upload an unapproved document as a processing target. The "application request" tool is a tool for the user who has uploaded the unapproved document to request another user to approve the unapproved document. For example, software (web application) that executes an electronic signature corresponds to the tool.

As a general operation of the software executing the electronic signature, in a case where another user who has received the approval request approves the unapproved document, a mail indicating that the unapproved document has been approved is transmitted to the user who is an approval request source. In this case, in a case where the software having the mail function as the Web View associated with an "approval confirmation" tool is activated in response to the user operation, the user who is the approval request source can confirm the mail indicating that the approval is given in the Web View. In addition, it is common that a link URL on the Web for displaying the approved document is described in the body text of the mail transmitted by the software for executing the electronic signature in order to confirm the content of the approval. Therefore, in a case where the user selects the URL displayed in the display area 403 used by the "approval confirmation" tool, a website indicated by the URL (here, a site on which software for executing the electronic signature is activated and the approved document is stored) is accessed, and the website is activated by the Web View. The user can download the approved document stored in the website to the workspace.

In this way, in a scene of executing the approval flow related to the document, since the work is often performed while moving back and forth between various types of software (web applications) with the document as a starting point, it is convenient in a case where the corresponding software can be activated from a single screen.

It should be noted that, in the present exemplary embodiment, the display content of the window 22 is the workspace, but the present invention is not limited thereto. The display content displayed in the window 22 corresponds to an element for activating other software, which is described by the icon 32, and is switched by the user operation on an element described by the button 2211. In addition, the display content of the window 22 may include the document or need not include the document, and the file to be displayed may be various data without being limited to the document. Alternatively, a screen of a mail application or a chat application may be the display content. In such a case, a target to be switched and displayed by the user may be, for example, a content of a mail in the mail application or a chat room in the chat application, and an element for activating other software may be, for example, a URL of a website included in the body text of the mail in the mail application or a URL of a website included in a chat message exchanged in the chat room. As is clear from the above, the element for activating the software does not necessarily have to be in an aspect such as the icon 32 disposed on the toolbar 30, and need only be included in the display content of the window 22. Further, in the above-described exemplary embodiment, the Web View is the website 8 or the like, but the Web View does not necessarily have to be the website and need only be activated in a window different from the window 22.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### (Supplementary Note)

(((1))) An information processing system comprising:
   a processor configured to:
   display a first content in a first window displayed on a display;
   in response to a user operation during a period in which the first content is displayed in the first window, display a second window corresponding to the user operation;
   in a case where the first content displayed in the first window is switched to another content, hide the second window and display the other content in the first window; and
   in a case where the display of the first window is returned to the first content, display the second window, which is displayed in response to the user operation in the first window in which the first content is displayed, in a state before the second window is hidden.
(((2))) The information processing system according to (((1))), wherein the processor is configured to:
   display the second window in which a specific operation is performed by a user before the second window is hidden, in a different manner from another second window.
(((3))) The information processing system according to (((2))), wherein the processor is configured to:
   in a case where a plurality of second windows are displayed, display the second window in which the specific operation is performed, on a foreground among the other second windows.
(((4))) The information processing system according to (((1))) or (((2))), wherein the processor is configured to:
   store an initial state in a case where the second window is displayed; and
   in a case where the second window in which the specific operation is performed is closed, update the initial state of the second window in which the specific operation is performed, to a state in a case where the second window is closed.
(((5))) The information processing system according to (((4))), wherein the processor is configured to:
   in a case where the second window is closed without the specific operation being performed after a state of the second window is changed after the second window is displayed, not update the initial state of the closed second window.
(((6))) The information processing system according to any one of (((1))) to (((5))),
   wherein the first content is a workspace in which a file is displayed, and the processor is configured to:
   enable the file to be exchanged between the workspace and the second window displayed in response to the user operation in the first window displayed in the workspace.
(((7))) The information processing system according to (((6))), wherein the processor is configured to:
   store the file on the second window, which is acquired by the user operation in the second window, in the workspace associated with the second window.
(((8))) The information processing system according to any one of (((1))) to (((7))), wherein the processor is configured to:
   in a case where the second window is displayed in a state where a user selects a file in the first content, display the second window in a state where a setting based on information on the first content or information on the file acquired from the file is performed.
(((9))) The information processing system according to (((8))), wherein the processor is configured to:
   in a case where the second window is a window for activating a mail tool, display the second window in a state where information on at least one of a destination, a subject, or a body text based on the information on the first content or the file is set in a mail created by the mail tool.
(((10))) A program causing a computer to realize:
   a function of displaying a first content in a first window displayed on a display;
   a function of, in response to a user operation during a period in which the first content is displayed in the first window, displaying a second window corresponding to the user operation;
   a function of, in a case where the first content displayed in the first window is switched to another content, hiding the second window and displaying the other content in the first window; and
   a function of, in a case where the display of the first window is returned to the first content, displaying the second window, which is displayed in response to the user operation in the first window in which the first content is displayed, in a state before the second window is hidden.

According to (((1))), the user can be enabled to reproduce a work environment in original display, in a state before switching, in a case where the user performs work using a state where a first window and a second window are displayed as the work environment, and the user switches display of the first window to another content and returns the display of the first window to the original display.

According to (((2))), the second window in which the specific operation is performed by the user among the second windows can be handled to be displayed in a different manner from the other second window.

According to (((3))), a display content of the second window in which the specific operation is performed can be visually recognized at all times.

According to (((4))), in a case where software that is activated in the second window in which the specific operation is performed is activated again, the second window in a state identical to the state at a termination point in time can be assigned to the software.

According to (((5))), in a case where the second window is closed without the specific operation being performed, the initial state can be prevented from being updated.

According to (((6))), it is possible to allow the mutual exchange of the file between the workspace and the software.

According to (((7))), the files acquired by the software can be collectively managed in the workspace.

According to (((8))), the software can be activated in a state where the setting is performed on the software in advance.

According to (((9))), all or a part of the information to be set in the mail can be automatically acquired and set from the document designated by the user.

According to (((10))), the user can be enabled to reproduce the work environment in the original display, in a state before switching, in a case where the user performs the work using a state where the first window and the second window are displayed as the work environment, and the user switches the display of the first window to another content and returns the display of the first window to the original display.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

2: cloud
4: network
6: workspace service
8: website
11: workspace execution processing unit
12: tool execution processing unit
13: user interface (UI) unit
14: control unit
15: storage unit
16: screen
22, 22a, 22b, 40, 40a-1, 40a-2, 40b, 40c: window

## Claims

1. An information processing system comprising:
a processor configured to:
display a first content in a first window displayed on a display;
in response to a user operation during a period in which the first content is displayed in the first window, display a second window corresponding to the user operation;
in a case where the first content displayed in the first window is switched to another content, hide the second window and display the other content in the first window; and
in a case where the display of the first window is returned to the first content, display the second window, which is displayed in response to the user operation in the first window in which the first content is displayed, in a state before the second window is hidden.

2. The information processing system according to claim 1, wherein the processor is configured to:
display the second window in which a specific operation is performed by a user before the second window is hidden, in a different manner from another second window.

3. The information processing system according to claim 2, wherein the processor is configured to:
in a case where a plurality of second windows are displayed, display the second window in which the specific operation is performed, on a foreground among the other second windows.

4. The information processing system according to claim 1 or 2, wherein the processor is configured to:
store an initial state in a case where the second window is displayed; and
in a case where the second window in which the specific operation is performed is closed, update the initial state of the second window in which the specific operation is performed, to a state in a case where the second window is closed.

5. The information processing system according to claim 4, wherein the processor is configured to:
in a case where the second window is closed without the specific operation being performed after a state of the second window is changed after the second window is displayed, not update the initial state of the closed second window.

6. The information processing system according to any one of claims 1 to 5,
wherein the first content is a workspace in which a file is displayed, and
the processor is configured to:
enable the file to be exchanged between the workspace and the second window displayed in response to the user operation in the first window displayed in the workspace.

7. The information processing system according to claim 6, wherein the processor is configured to:
store the file on the second window, which is acquired by the user operation in the second window, in the workspace associated with the second window.

8. The information processing system according to any one of claims 1 to 7, wherein the processor is configured to:
in a case where the second window is displayed in a state where a user selects a file in the first content, display the second window in a state where a setting based on information on the first content or information on the file acquired from the file is performed.

9. The information processing system according to claim 8, wherein the processor is configured to:
in a case where the second window is a window for activating a mail tool, display the second window in a state where information on at least one of a destination, a subject, or a body text based on the information on the first content or the file is set in a mail created by the mail tool.

10. A program causing a computer to realize:
a function of displaying a first content in a first window displayed on a display;
a function of, in response to a user operation during a period in which the first content is displayed in the first window, displaying a second window corresponding to the user operation;
a function of, in a case where the first content displayed in the first window is switched to another content, hiding the second window and displaying the other content in the first window; and
a function of, in a case where the display of the first window is returned to the first content, displaying the second window, which is displayed in response to the user operation in the first window in which the first content is displayed, in a state before the second window is hidden.

11. An information processing method comprising:
displaying a first content in a first window displayed on a display;
displaying, in response to a user operation during a period in which the first content is displayed in the first window, a second window corresponding to the user operation;
hiding, in a case where the first content displayed in the first window is switched to another content, the second window and displaying the other content in the first window; and
displaying, in a case where the display of the first window is returned to the first content, the second window, which is displayed in response to the user operation in the first window in which the first content is displayed, in a state before the second window is hidden.
